# EUROPÄISCHE PATENTSCHRIFT

(11) **EP 4 292 441 B1**
(45) Veröffentlichungstag und Bekanntmachung des Hinweises auf die Patenterteilung: **12.11.2025**
(21) Anmeldenummer: 22178781.5
(22) Anmeldetag: 13.06.2022
(51) Int. Cl.: B67D 1/00, A23B 2/75, A23B 2/792, A23B 70/10, B67C 3/02

(54) **VORRICHTUNG UND VERFAHREN ZUM KONSERVIEREN VON GETRÄNKEN**
METHOD AND DEVICE FOR PRESERVING DRINKS
DISPOSITIF ET PROCÉDÉ DE CONSERVATION DE BOISSONS

(43) Veröffentlichungstag der Anmeldung: 20.12.2023
(73) Patentinhaber: LANXESS Deutschland GmbH, 50569 Köln (DE); IMD Natural Solutions GmbH, 44227 Dortmund (DE)
(72) Erfinder: Vogl, Erasmus, 51429 Bergisch Gladbach (DE); Dahmen, Michael, 51143 Köln (DE); Bitzer, Jens, 44225 Dortmund (DE)
(74) Vertreter: Hannke Bittner & Partner mbB Regensburg

(56) Entgegenhaltungen:
- EP-A1- 4 070 667
- WO-A1-2022/112132
- DE-A1- 102007 045 958
- US-A- 3 506 460
- US-A1- 2014 318 670

## Beschreibung

Die vorliegende Erfindung betrifft eine Vorrichtung und ein Verfahren zum Konservieren von Getränken.

Vorrichtungen zur Dosage und auch zur Inline-Dosage von einzelnen Produktkomponenten oder konfektionierten Zwischenprodukten in der Lebensmittelindustrie sind aus dem Stand der Technik bekannt. So werden bespielweise bei der Getränkeherstellung in einem sogenannten Mixer, auch Blender genannt, verschiedene Zutaten wie Wasser, Zuckersirup, Aromen, Saftkonzentrate, Grundstoffe, etc. in gewissen Massen- oder Volumenverhältnissen kontinuierlich miteinander vermischt.

Im Falle eines karbonisierten Getränks wird zumeist in der gleichen Anlage noch Kohlendioxid zugeführt. Letztendlich entsteht in diesem Schritt, der sogenannten Produktausmischung, das sensorisch fertige Produkt aus seinen Einzelbestandteilen. Im Anschluss wird dieses wiederum zumeist kontinuierlich oder aber ggf. über einen Puffertank den nachfolgenden Prozessschritten wie beispielweise einer Kurzzeithocherhitzung, Filtration oder aber auch direkt der Füllmaschine zugeführt.

Analog zur kontinuierlichen Inline-Ausmischung von Getränken können die einzelnen Zutaten einer Rezeptur auch in einem Ansatzbehälter, auch Batchtank genannt, miteinander vermischt werden und im Anschluss der ggf. vorhandenen Karbonisierung, Produktbehandlung und Abfüllung zugeführt werden. Da die Abfüllung zumeist ein kontinuierlicher Prozess ist, finden alle vorgelagerten Schritte, sobald das Fertiggetränk ausgemischt ist, teilweise auch in kontinuierlicher Form statt.

Um das Getränk vor mikrobiologischem Verderb zu schützen, können Getränkehersteller auf verschiedene Technologien und Methoden der Haltbarmachung zurückgreifen. Je nach Verpackungsmaterial, wie beispielsweise Kartonverpackung, Kunststoff- oder Glasflasche, Schlauchbeutel oder Dose, etc. werden Verfahren wie Tunnelpasteurisation oder Heißabfüllung bzw. aseptische Kaltabfüllung möglicherweise häufiger verwendet oder sie schließen sich aufgrund von Produkt- oder Verpackungseigenschaften aus.

Neben primär physikalischen Methoden der Haltbarmachung von Getränken können diese mit chemischen Methoden der Konservierung kombiniert werden, um mikrobiologische Stabilität über die gesamte Haltbarkeit des Produkts bei gegebenen Lagerbedingungen (z.B. in oder außerhalb der Kühlkette) zu gewährleisten. Für die klassische chemische Konservierung bei Getränken wird auf Sorbinsäure oder Benzoesäure zurückgegriffen, die zumeist als jeweiliges Salz in fester Form oder als Vorlösung dem Getränk bei der Produktausmischung zugesetzt werden.

Daneben ist die Getränkebehandlung mit Dimethyldicarbonat bekannt, welches dem Getränk unmittelbar vor der Abfüllung zudosiert wird und anschließend zeit- und temperaturabhängig zerfällt.

In jüngerer Zeit sind auch Verfahren bekannt geworden, bei denen natürliche Konservierungsmittel, wie etwa das unter der Marke Nagardo bekannte Konservierungsmittel verwendet werden, um mikrobiologischen Schutz auf Basis von Glykolipiden, die vorzugsweise aus pilzlichen Extrakten hergestellt werden, zur Verfügung zu stellen.

Dabei handelt es sich um ein Pulver, welches in der Regel in Wasser vorgelöst wird. Die Stammlösung hat üblicherweise eine Konzentration von 0,5% - 3% wobei eine höhere bzw. niedrigere Konzentration ebenso denkbar wären. Ebenso könnte eine Vorlösung in einer oder mehrerer Produktkomponenten stattfinden.

Aus der DE 10 2007 045 958 A1 ist ein Verfahren zur Dosierung von Dialkyldicarbonaten in Getränke bekannt. Dabei wir das Dialkylcarbonat in Form einer wässrigen und/oder organischen Lösung dem Getränk zugegeben.

Aus der US 3,506,460 ist ein Steuerungssystem für einen Sterilisationsprozess bekannt.

Die US 2014/0318670 A1 beschreibt eine Füllvorrichtung zum Befüllen von Behältnissen. Dabei können zwei Flüssigkeitsanteile in das Behältnis zugefüllt werden.

Die WO 2022/112132 A1 beschreibt ein Verfahren zur Sterilisierung und Konservierung von Getränken. Dabei werden Glykolipide eingesetzt.

In der nachveröffentlichten EP 4 070 667 A1 werden ebenfalls ein Verfahren und eine Vorrichtung zur Konservierung von Getränken beschrieben.

Der vorliegenden Erfindung liegt die Aufgabe zugrunde, eine Vorrichtung und ein Verfahren zur Verfügung zu stellen, welches die Zumischung zur Konservierung eines Getränks in einfacher Weise ermöglicht. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zur Konservierung von Getränken weist eine Flüssigkeitsleitung auf, durch welche eine Flüssigkeit und insbesondere ein Getränk führbar ist. Daneben weist die Vorrichtung eine erste Durchflussmesseinrichtung auf, welche dazu geeignet und bestimmt ist, eine Durchflussmenge der durch die Flüssigkeitsleitung strömenden Flüssigkeit zu bestimmen. Weiterhin ist ein erstes Aufnahmebehältnis zur Aufnahme eines Konservierungsmittels vorgesehen und eine Zuführleitung, welche dazu geeignet ist, das Konservierungsmittel (ausgehend) von dem Aufnahmebehältnis der Flüssigkeitsleitung zuzuführen.

Bevorzugt handelt es sich bei dem Konservierungsmittel um ein in flüssiger Form vorliegendes Konservierungsmittel, dass entweder als Vorlösung aus einem Pulver hergestellt oder fertig konfektioniert zugeführt wird.

Konservierungsmittel sind beispielsweise und vorzugsweise Sorbinsäure, Sorbate, Benzoesäure, Benzoate, Natamycin, Dialkyldicarbonate, pilzliche Extrakte und Glykolipide.

Besonders bevorzugt handelt es sich bei dem Konservierungsmittel um Mischungen von Glycolipiden der Formel (I) 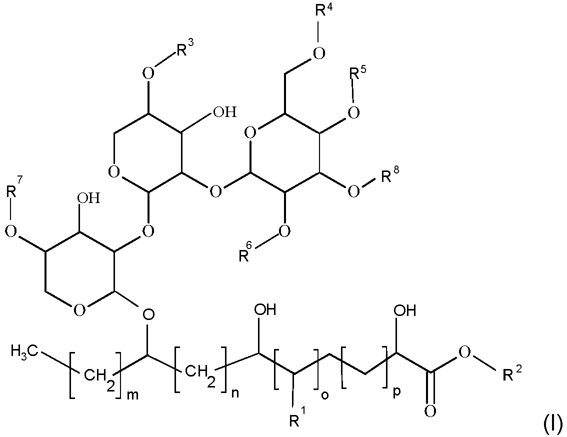 wobei,
m = 3 oder 5,
n = 3,
o = 1
p = 11 oder 13
R¹ ist -H oder -OH, bevorzugt ist R¹ = OH,
R² ist -H, Alkalimetall- oder ein Äquivalent eines Erdalkalimetallkations oder -C₁-C₆-Alkyl; vorzugsweise -H oder Alkalimetall- oder ein Äquivalent eines Erdalkalimetallkations; und
R³, R⁴, R⁵, R⁶ und R⁷ sind unabhängig voneinander H oder -C(=O)C₁-C₁₂-Alkyl
und R⁸ = H oder -C(=O)C₁-C₁₂-Alkyl ist.

In einer bevorzugten Ausführungsform der Erfindung sind R³, R⁴, R⁵, R⁶ ,R⁷ und R⁸ unabhängig voneinander H oder -C(=O)C₁-C₆-Alkyl, weiter bevorzugt H oder -C(=O)C₃-C₆-Alkyl und R⁸ = H oder -C(=O)C₁-C₆-Alkyl, noch weiter bevorzugt sind R⁴ = -C(=O)isobutyl und R³, R⁵, R⁶, R⁷, R⁸ = H oder/und -C(=O)CH₃.

In einer weiteren bevorzugten Ausführungsform sind R², R⁶ und R⁷ = H.

In einer weiteren bevorzugten Ausführungsform ist die Verbindung der Formel (I) mindestens eine Verbindung der Formel (II-A) bis (II-D) oder Gemische dieser Verbindungen 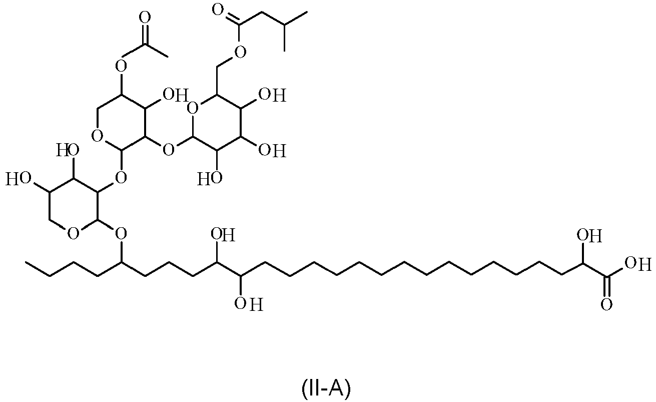 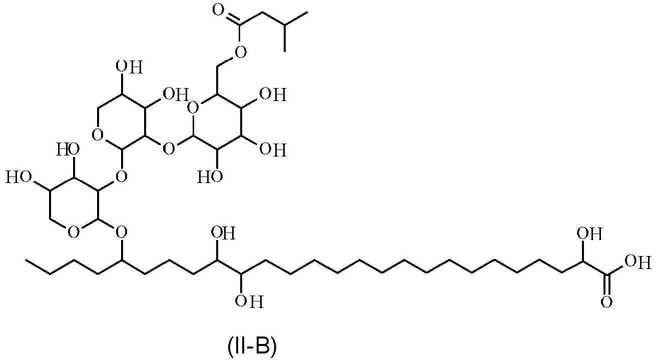 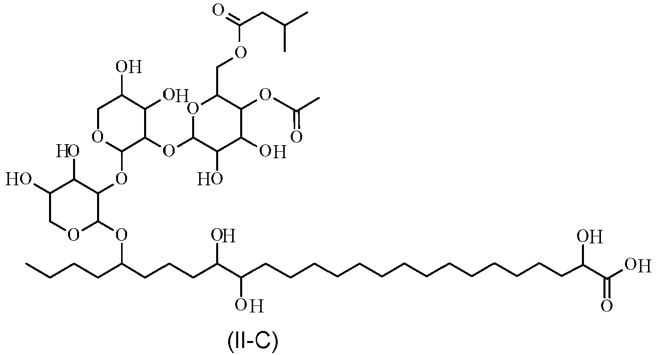 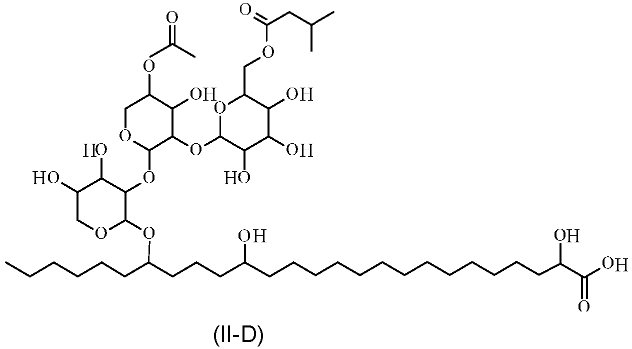 und Salze dieser Verbindungen.

Diese Glycolipide sind gewerblich als Nagardo^{®} von der LANXESS Deutschland GmbH zu erhalten.

Bevorzugt liegen die Glycolipide in Pulverform vor. Die Glycolipide werden dann vorzugsweise gelöst und in flüssiger Form in dem erfindungsgemäßen Verfahren eingesetzt. Erfindungsgemäß weist die Vorrichtung eine erste Steuerungseinrichtung auf, welche dazu geeignet und bestimmt ist, die Zufuhr des Konservierungsmittels in die Flüssigkeitsleitung zu steuern, wobei das Konservierungsmittel kontinuierlich der Flüssigkeitsleitung zuführbar ist.

Es wird daher im Rahmen der Erfindung vorgeschlagen, dass eine gesteuerte Online-Dosage des Konservierungsmittels in eine Getränkeleitung erfolgt.

Besonders bevorzugt steuert die erste Steuerungseinrichtung die Zufuhr des Konservierungsmittels in die Flüssigkeitsleitung auf Basis der durch die erste Durchflussmesseinrichtung gemessenen Durchflüsse. Daneben können jedoch auch weitere Kriterien für die Steuerung dieser Zufuhr des Konservierungsmittels herangezogen werden.

Die erste Steuerungseinrichtung weist ein steuerbares und bevorzugt regelbares Ventil auf, welches in der Zuführleitung angeordnet ist. Bei diesem Ventil kann es sich beispielsweise um ein Proportionalventil handeln. Durch die Steuerung dieses Ventils kann die Menge an Konservierungsmittel, welches in die Zuführleitung eingeführt wird, gesteuert werden.

Bei einer weiteren vorteilhaften Ausführungsform weist die Vorrichtung eine zweite Durchflussmesseinrichtung auf, welche zwischen dem ersten Aufnahmebehältnis und der Flüssigkeitsleitung angeordnet ist und welche dazu geeignet und bestimmt ist, eine Durchflussmenge des Konservierungsmittels (insbesondere durch die Zuführleitung) zu bestimmen.

Bei einer weiteren vorteilhaften Ausführungsform ist ein Knotenpunkt vorgesehen, an dem die Zuführung des Konservierungsmittels in die Flüssigkeitsleitung erfolgt. Bevorzugt ist ein Querschnitt der Zuführleitung geringer als ein Querschnitt der Flüssigkeitsleitung. Dabei ist es denkbar, dass das Konservierungsmittel der Flüssigkeitsleitung im Wesentlichen in senkrechter Richtung zugeführt wird, es wäre jedoch auch möglich, dass eine Zuführung in einer Richtung erfolgt, welche bereits eine Richtungskomponente aufweist, welche in Richtung der durch die Flüssigkeitsleitung strömenden Flüssigkeit verläuft. Die Durchmischung des Konservierungsmittels und der Flüssigkeit erfolgt im Normalfall durch die Turbulenz des aufnehmenden Flüssigkeitsstroms kann aber auch durch eine zusätzliche Mischvorrichtung in der Rohrleitung selbst unterstütz werden. Dabei kann es sich um einen statischen Mischer handeln.

Ebenso kann die Zuführleitung des Konservierungsmittels in die Rohrleitung der Flüssigkeit hineingeführt werden, um die Zugabe in Bereiche höherer Strömungsgeschwindigkeiten zu ermöglichen und damit die Durchmischung zu forcieren.

Bevorzugt ist die Vorrichtung modular aufgebaut und auf diese Weise in bestehende Anlagen einsetzbar bzw. nachrüstbar. Bevorzugt weist die Vorrichtung einen Eingangsanschluss auf, über den der Vorrichtung Flüssigkeit zuführbar ist. Bevorzugt weist die Vorrichtung einen Ausgangsanschluss auf, über welchen mit dem Konservierungsmittel versehene Flüssigkeit aus der Vorrichtung abführbar ist.

Bevorzugt sind alle Komponenten der Vorrichtung zwischen dem Eingangsanschluss und dem Ausgangsanschluss angeordnet. Wenigstens einer dieser Anschlüsse und bevorzugt beide Anschlüsse sind bevorzugt als Flanschverbindungen ausgeführt, welche bevorzugt flüssigkeitsdicht mit weiteren Flanschverbindungen (etwa einer bestehenden Anlage) verbindbar sind.

Bevorzugt handelt es sich bei der Flüssigkeitsleitung um ein Leitungsstück bzw. einen Leitungsabschnitt, der zwischen dem Eingangsanschluss und dem Ausgangsanschluss angeordnet ist. Diese Flüssigkeitsleitung weist bevorzugt einen konstanten Querschnitt auf. Bevorzugt ist ein Querschnitt der Flüssigkeitsleitung an den Querschnitt einer zuführenden Flüssigkeitsleitung einer bestehenden Anlage angepasst, in welche die erfindungsgemäße Vorrichtung integriert ist. Bevorzugt entsprechen diese Querschnitte einander. Bevorzugt entspricht der Querschnitt der Flüssigkeitsleitung der Vorrichtung auch dem Querschnitt einer abführenden Flüssigkeitsleitung der Anlage, in welche die erfindungsgemäße Vorrichtung integriert ist.

Bei einer weiteren bevorzugten Ausführungsform ist die erfindungsgemäße Vorrichtung unabhängig von einer Anlagensteuerung einer Anlage, in welche die erfindungsgemäße Vorrichtung integriert ist, steuerbar. So ist es möglich, dass eine die erfindungsgemäße Vorrichtung steuernde Eingangsgröße der von der ersten Durchflussmesseinrichtung gemessene Durchfluss einer Flüssigkeit und insbesondere eines Getränks durch die Flüssigkeitsleitung ist.

Bei einer weiteren vorteilhaften Ausführungsform weist die Vorrichtung ein zweites Aufnahmebehältnis zur Aufnahme des Konservierungsmittels auf. Durch die Verwendung dieses zweiten Aufnahmebehältnisses kann insbesondere auch eine kontinuierliche Zufuhr des Konservierungsmittels gewährleistet werden. Besonders bevorzugt weist die Vorrichtung eine erste Zweigleitung auf, welche das erste Aufnahmebehältnis mit der Zuführleitung verbindet und eine zweite Zweigleitung, welche das zweite Aufnahmebehältnis mit der Zuführleitung verbindet. Besonders bevorzugt ist in wenigstens einer der Zweitleitungen eine Ventileinrichtung angeordnet. Besonders bevorzugt ist in beiden Zweitleitungen eine Ventileinrichtung angeordnet. Auf diese Weise kann gesteuert werden, von welchem Aufnahmebehältnis ausgehend das Konservierungsmittel der Zuführleitung zugeführt wird.

Bei einer weiteren bevorzugten Ausführungsform weist die Vorrichtung wenigstens eine Anschlussschnittstelle auf, um das Aufnahmebehältnis an die Zuführleitung anzubinden. Auf diese Weise ist es möglich, das Aufnahmebehältnis von der Zuführleitung zu demontieren. Bevorzugt ist jedem Aufnahmebehältnis eine derartige Anschlussschnittstelle zugeordnet.

Bei einer weiteren vorteilhaften Ausführungsform weist wenigstens ein Aufnahmebehältnis und weisen bevorzugt alle Aufnahmebehältnisse eine Mischeinrichtung auf, um eine Komponente des Konservierungsmittels in eine Flüssigkeit einzumischen. So ist es möglich, dass eine Komponente beispielsweise in Pulverform in eine Flüssigkeit, wie insbesondere aber nicht ausschließlich Wasser eingemischt wird.

Bevorzugt weist das Aufnahmebehältnis eine Zuführöffnung auf, über welche beispielsweise durch einen Benutzer dem Aufnahmebehältnis eine Komponente des Konservierungsmittels zuführbar ist. Diese Zuführöffnung kann beispielsweise in einem Deckel des Aufnahmebehältnisses intergiert sein. Bevorzugt ist das Aufnahmebehältnis aus einem Metall gefertigt.

Bevorzugt weist die Mischeinrichtung eine Rühreinrichtung auf, welche die Flüssigkeit mit der zugeführten Komponente vermischt und diese bevorzugt im fortlaufenden Produktionsprozess schonend in Schwebe hält.

Die Rühreinrichtung kann - bevorzugt stufenlos - mit unterschiedlichen Geschwindigkeiten betrieben werden, bevorzugt mindestens aber mit einer hohen Geschwindigkeit zur Pulverlösung und einer niedrigen Geschwindigkeit zur schonenden Durchmischung.

Des weiteren ist die Rühreinrichtung bevorzugt dazu geeignet einen ausreichenden Energieeintrag zur Pulverlösung zu liefern. Dabei kann es sich sowohl um eine von oben, seitlich oder aber auch vom Tankboden aus montierte Rühreinrichtung und insbesondere ein Rührwerk handeln, das zentrisch oder exzentrisch angeordnet ist.

Die Ausführung des Rührwerks kann sowohl als Propeller-, Schrägblatt-, Impeller- oder Dispersionrührwerk, ein- oder mehrstufig erfolgen, wobei auch andere Rührwerksgeometrien zum Einsatz kommen können.

Bei einer weiteren vorteilhaften Ausführungsform ist die Mischeinrichtung mit einer Zirkulationspumpe ausgestattet, die ein fortlaufendes Mischen der Flüssigkeit mit dem Konservierungsmittel ermöglicht.

Bevorzugt weist die Vorrichtung eine Reinigungseinrichtung auf, welche eine (Selbst)reinigung der Vorrichtung, insbesondere eine sog. CIP (cleaning in place) Reinigung ermöglicht. Bei einer bevorzugten Ausführungsform ist in dem Aufnahmebehältnis wenigstens eine Sprüheinrichtung, wie insbesondere eine Sprühdüse oder eine Sprühkugel vorgesehen, welche dazu dient, ein Reinigungsmittel in das Aufnahmebehältnis einzubringen sowie bevorzugt, das Rührwerk und den Behälter an sich zu reinigen.

Bevorzugt kann dieses Reinigungsmittel auch zum Reinigen der Zuführleitung verwendet werden. Anstelle oder zusätzlich zu dem Reinigungsmittel kann auch ein Sterilisationsmedium wie Dampf oder Desinfektionsmittel wie beispielsweise Peressigsäurelösung zugeführt werden.

Bei einer bevorzugten Ausführungsform weist die Vorrichtung einen Reinigungsmodus auf, in dem eine Reinigung der Vorrichtung durchführbar ist. Dabei kann Reinigungsmittel bevorzugt durch die gesamte Vorrichtung und insbesondere durch die Konservierungsmittel- und/oder Produktführenden Komponenten geschickt werden.

Bevorzugt sind die Komponenten der Vorrichtung resistent gegenüber Reinigungsmitteln und/oder Sterilisationsmedien.

Bei einer weiteren vorteilhaften Ausführungsform weist die Vorrichtung eine zweite Steuerungseinrichtung auf, welche dazu geeignet und bestimmt ist, die Zufuhr der mit dem Konservierungsmittel versehenen Flüssigkeit zu einer Fülleinrichtung zu leiten bzw. zu steuern, wobei die zweite Steuerungseinrichtung bevorzugt ein steuerbares Ventil aufweist. Besonders bevorzugt handelt es sich bei diesem steuerbares Ventil wiederum um ein Proportionalventil. Dabei kann beispielsweise eine kontinuierliche oder auch chargenweise Zuführung erfolgen. Bevorzugt kann die Zuführung beispielsweise in einen Fülltank einer Füllmaschine erfolgen.

Die Vorrichtung weist eine erste Pumpeneinrichtung zum Fördern des Konservierungsmittels auf, wobei diese Pumpeneinrichtung bevorzugt eine steuerbare Pumpeneinrichtung ist. Besonders bevorzugt ist diese Pumpeneinrichtung dabei aus einer Gruppe von Pumpeneinrichtungen ausgewählt, welche insbesondere Verdrängerpumpen, wie beispielsweise Kreiskolbenpumpen, Exzenterschneckenpumpen, Schlauchpumpen, oder dergleichen enthält. Dabei die jeweilige Pumpe so zu wählen, dass diese einen höheres Druckniveau liefert als das in der Flüssigkeitsleitung vorherrschende., enthält. Dabei wird die jeweilige Pumpe bevorzugt so gewählt, dass diese einen höheres Druckniveau liefert als das in der Flüssigkeitsleitung vorherrschende. Bevorzugt ist die Pumpe dazu geeignet und bestimmt, ein Druckniveau zu liefern, welches wenigstens 5%, bevorzugt wenigstens 10%, bevorzugt wenigstens 20% über dem in der Druckleitung vorherrschenden Druckniveau liegt

Bei einer weiteren vorteilhaften Ausführungsform handelt es sich um eine steuerbare Pumpeneinrichtung. Diese ist insbesondere in Bezug auf eine Fördermenge steuerbar. Je nach zu behandelter Getränkemenge und gewählter Einsatzkonzentration des Konservierungsmittels liegt die Fördermenge bevorzugt zwischen 0,15 I/h bis zu 150 I/h wobei auch kleinere oder größere Menge von der Vorrichtung bei entsprechender Konfektionierung abgebildet werden können.

Bei einer weiteren vorteilhaften Ausführungsform ist die Vorrichtung dazu geeignet und bestimmt, der Flüssigkeitsleitung Glykolipide zuzuführen. Bei einer bevorzugten Ausführungsform weist die Vorrichtung eine Kühleinrichtung zum Kühlen des Konservierungsmittels auf. Insbesondere weist das Aufnahmebehältnis eine derartige Kühleinrichtung auf. Das hier verwendete Konservierungsmittel ist abhängig von seiner Temperatur über unterschiedliche Zeiträume hinweg haltbar. Durch ein Kühlen des Konservierungsmittels oder wenigstens einer Komponente des Konservierungsmittels kann der Zeitraum, über den hinweg die Zufuhr des Konservierungsmittels in die Flüssigkeit möglich ist, erhöht werden.

Bei einer bevorzugten Ausführungsform weist die Vorrichtung eine Zeit- und/oder eine Füllstandsmesseinrichtung auf, welche es ermöglicht, den Zeitraum, über den hinweg sich das Konservierungsmittel in dem Aufnahmebehältnis befindet zu ermitteln. Bevorzugt kann auf diese Weise an einen Benutzer eine Information darüber ausgegeben werden, bis zu welchem Zeitpunkt das Konservierungsmittel zu verbrauchen ist.

Bei einer bevorzugten Ausführungsform weist die Vorrichtung eine Probenentnahmeeinrichtung auf, welche es ermöglicht, aus dem Aufnahmebehältnis oder der Zuführleitung eine Probe des Konservierungsmittels auszuschleusen, insbesondere um dieses zu analysieren. Bei einer bevorzugten Ausführungsform steht ein Querschnitt der Zuführleitung in einem vorgegebenen Verhältnis zu einem Querschnitt der Flüssigkeitsleitung. Bevorzugt liegt dieses Querschnittsverhältnis Flüssigkeitsleitung zu Zuführleitung zwischen 2,5 und 10., wobei auch kleiner oder größere Verhältnisse möglich sind.

Bei einer weiteren bevorzugten Ausführungsform steht ein Aufnahmevolumen eines Aufnahmebehältnisses in einem vorgegebenen Verhältnis zur Abfüllmenge und gewünschter Einsatzkonzentration. Typischerweise liegt dieses Verhältnis bei 0,0003 bis 0,003 bezogen auf die beiden voran genannten Bezugsgrößen. Auf diese Weise kann sichergestellt werden, dass in einem normalen Arbeitsbetrieb das in einem Aufnahmebehältnis befindliche Konservierungsmittel in einem vorbestimmten Zeitraum einem Getränk zugeführt wird.

Bei einer weiteren vorteilhaften Ausführungsform weist die Vorrichtung eine Mischeinrichtung auf, welche wenigstens zwei und bevorzugt mehrere Komponenten zur Herstellung des Getränks mischt, wobei bevorzugt diese Mischeinrichtung in der Strömungsrichtung des Getränks stromaufwärts zu einer Position angeordnet ist, in der das Konservierungsmittel zugemischt wird. Bevorzugt handelt es sich dabei bei dem Getränk um ein aus mehreren Komponenten wie etwa Sirupen, Zucker und Wasser zusammengesetztes Getränk. Dies wird in dem oben beschriebenen Mischer zusammengesetzt. Die Zuführung des Konservierungsmittels erfolgt bevorzugt nach dieser Mischung.

Offenbart ist weiterhin eine Anlage zur Abfüllung von Getränken in Behältnissen, welche eine Vorrichtung der oben beschriebenen Art aufweist. Bevorzugt weist die Anlage ein Ventil auf, welches bewirkt, dass die Flüssigkeit und insbesondere die bereits mit dem Konservierungsmittel versehene Flüssigkeit einer Fülleinrichtung zugeführt wird. Besonders bevorzugt weist die Vorrichtung eine Einrichtung auf, welche dem Getränk ein Gas und insbesondere Kohlendioxid zuführt. Dabei ist es auch möglich, dass eine weitere Vorrichtung vorgesehen ist, welche den bereits befüllten Behältnissen separat jeweils Kohlendioxid zuführt.

Einer bevorzugten Ausführungsform weist die Anlage Verschließeinrichtung auf, welche die befüllten Behältnisse mit Verschlüssen versieht.

Die vorliegende Erfindung ist weiterhin auf ein Verfahren zur Konservierung von Getränken gerichtet, welche eine Flüssigkeitsleitung aufweist, durch welche eine Flüssigkeit und insbesondere ein Getränk geführt wird und eine erste Durchflussmesseinrichtung, welche eine Durchflussmenge der durch die Flüssigkeitsleitung strömenden Flüssigkeit bestimmt, wobei in einem ersten Aufnahmebehältnis ein Konservierungsmittel aufgenommen wird. Weiterhin wird mit einer Zuführleitung das Konservierungsmittel der Flüssigkeitsleitung zugeführt. Erfindungsgemäß weist die Vorrichtung eine erste Steuerungseinrichtung auf, welche die Zufuhr des Konservierungsmittels in die Flüssigkeitsleitung steuert, wobei das Konservierungsmittel kontinuierlich der Flüssigkeitsleitung zugeführt wird. Die Zuführung des Konservierungsmittels erfolgt kontinuierlich. Bei einem bevorzugten Verfahren berücksichtigt eine Steuerungseinrichtung die Durchflussmenge des Getränks und bevorzugt auch die Durchflussmenge des Konservierungsmittels durch die Zuführleitung.

Unter kontinuierlich wird dabei insbesondere eine ständige und ununterbrochene Zuführung des Konservierungsmittels in die Flüssigkeit verstanden, wobei insbesondere ein konstanter Zufluss des Konservierungsmittels in das Getränk erfolgt.

Bei dem erfindungsgemäßen Verfahren enthält das Konservierungsmittel Glykolipide .

Bevorzugt ist der Anteil der Glykolipide in einer Stammlösung (und/oder dem Konservierungsmittel) größer als 0,1 %, bevorzugt größer als 0,3 % und bevorzugt größer als 0,5 %. Bei einem weiteren bevorzugten Verfahren ist ein Anteil der Glykolipide in einer Stammlösung (und/oder dem Konservierungsmittel) kleiner als 20 %, bevorzugt kleiner als 18 %, bevorzugt kleiner als 15 %, bevorzugt kleiner als 13 %, bevorzugt kleiner als 10 %, bevorzugt kleiner als 7 %, bevorzugt kleiner als 5 % und bevorzugt kleiner als 3 % und besonders bevorzugt kleiner als 2%. Bevorzugt ist der der Anteil der Glykolipide größer als 0,2%, bevorzugt größer als 0,4%, bevorzugt größer als 0,6%, bevorzugt größer als 0,8% und besonders bevorzugt größer als 1,0%.

Bevorzugt handelt es sich bei der Flüssigkeit um ein Getränk. Bevorzugt handelt es sich bei der Flüssigkeit um ein karbonisiertes oder nichtkarbonisiertes Getränk. Besonders bevorzugt handelt es sich bei der Flüssigkeit um ein Getränkezubereitung oder bevorzugt um einen Direktsaft. Besonders bevorzugt handelt es sich um ein karbonisiertes Getränk. Ebenfalls besonders bevorzugt handelt es sich um ein nichtkarbonisiertes, klares Getränk mit Fruchtsaft oder Fruchtaroma, oder um klaren 100%igen Saft.

Bei einem weiteren bevorzugten Verfahren weist die Flüssigkeit (welcher das Konservierungsmittel zugeführt wird) einen pH-Wert auf, der geringer ist als 7,0, bevorzugt geringer als 6,5, bevorzugt geringer als 6,0, bevorzugt geringer als 5,5 und besonders bevorzugt geringer als 5,0 und besonders bevorzugt geringer als 4,8 und besonders bevorzugt geringer als 4,6.

Bei einem bevorzugten Verfahren erfolgt die Zugabe der Stammlösung (bzw. des Konservierungsmittels) während der Produktausmischung, und besonders bevorzugt als letzter Schritt und/oder nach einer Mischung des Produkts bzw. des Getränks. Aufgrund spezifischer Produkteigenschaften der Konservierungsmittel, vorzugsweise der Glykolipide, wäre eine Dosage unmittelbar vor der Füllmaschine oder einem der Produktausmischung nachgelagerten Prozessschritt denkbar und teilweise auch vorzuziehen.

Bevorzugt wird das Konservierungsmittel bzw. die Stammlösung der Flüssigkeit in einer Konzentration zugeführt, die größer ist als 1ppm, besonders bevorzugt größer als oder gleich 2ppm und besonders bevorzugt größer als oder gleich 3ppm. Bevorzugt wird das Konservierungsmittel bzw. die Stammlösung der Flüssigkeit in einer Konzentration zugeführt, die kleiner ist als oder gleich 100ppm, bevorzugt kleiner als 80ppm und bevorzugt größer als 60ppm, bevorzugt kleiner als 50ppm und besonders bevorzugt kleiner als 40ppm und besonders bevorzugt kleiner als oder gleich 30ppm.

Das erfindungsgemäße Verfahren zeichnet sich dadurch aus, dass eine vorrangig natürliche Konservierung, welche bevorzugt im Getränk verbleibt und eine wesentliche Komponente des mikrobiologischen Schutzes über den gesamten Zeitraum der Produkthaltbarkeit darstellt, kontinuierlich bzw. inline in das fertige Getränk oder aber auch in eine Vorstufe des Endproduktes dosiert wird.

Bevorzugt wird dem Getränk ein weiteres Konservierungsmittel zugeführt. Bevorzugt handelt es sich bei diesem weiteren Konservierungsmittel um Dialkyldicarbonate, besonders bevorzugt um Dimethyldicarbonat.. Bevorzugt weist die oben beschriebene Vorrichtung eine weitere Zuführungseinrichtung auf, um dem Getränk ein weiteres Konservierungsmittel zuzuführen.

Bevorzugt erfolgt die Zuführung des weiteren Konservierungsmittels nach der Zuführung des hier beschriebenen Konservierungsmittels, bevorzugt wenn es sich bei dem Konservierungsmittel um ein Dialkyldicarbonat handelt. Andere Konservierungsmittel wie beispielsweise Sorbat oder Benzoat können gegebenenfalls zuvor oder aber über die hier beschriebene Vorrichtung zudosiert werden.

In einer weiteren Ausführung wird die Zuführung des natürlichen Konservierungsmittels über das hier beschriebene Verfahren mit thermischen Verfahren der Haltbarkeitsmachung kombiniert, bevorzugt mit Kurzzeiterhitzung. Dabei kann die Zuführung des Konservierungsmittels in den Flüssigkeitsstrom vor der Kurzzeiterhitzung oder nach der Kurzzeiterhitzung erfolgen. Daneben wäre auch eine Kombination mit einer UV - Sterilisation denkbar.

In einer weiteren Ausführung wird die Zuführung des natürlichen Konservierungsmittels über das hier beschriebene Verfahren mit der Heißabfüllung der Flüssigkeit kombiniert. Dabei erfolgt die Zuführung des Konservierungsmittels in den Flüssigkeitsstrom bevorzugt kurz vor der Erhitzung der Flüssigkeit.

Zudem besteht die Möglichkeit das hier beschriebene Verfahren mit weiteren physikalischen Methoden der Haltbarmachung zu kombinieren, dies könnte beispielsweise Hochdruckpasteurisation sowie UV Behandlung sein.

Die Dosiereinheit verfügt vorteilhaft über eine hinreichende Genauigkeit, eine Konzentration des Wirkstoffs im Fertiggetränk oder der Vorstufe (z.B. konzentriertem Sirup) von 2 bis 1.000 ppm sicherzustellen. Neben der Möglichkeit der kontinuierlichen Dosage in den Produktstrom verfügt die Dosiereinheit bevorzugt über eine Anschlussmöglichkeit zur kontinuierlichen Entnahme des Wirkstoffs aus einem oder mehreren Vorratsbehältnis(-sen). Das Vorratsbehältnis kann sowohl aus ein oder mehreren Tank(s) bestehen als auch als komplette Ausmischstation zur Vorlösung des Wirkstoffs ausgeführt sein.

Bevorzugt wird das Konservierungsmittel wenigstens zeitweise gekühlt und insbesondere auf eine Temperatur gekühlt, die zwischen 1°C und 15°C, bevorzugt zwischen 2°C und 12°C, bevorzugt zwischen 3°C und 10°C und besonders bevorzugt zwischen 4°C und 8°C liegt.

Nach Beendigung der Produktion kann das Dosiergerät entsprechend der anderen Prozess- und Fülleinheiten gereinigt und ggf. desinfiziert werden.

Bei einem weiteren bevorzugten Verfahren wird in dem Aufnahmebehältnis eine erste Komponente des Konservierungsmittels mit einer zweiten Komponente des Konservierungsmittels gemischt, wobei sich besonders bevorzugt bei der zweiten Komponente um Wasser handelt. Dabei ist es möglich, dass die erste Komponente in einer Spray-, Dampf- oder insbesondere Pulverform der zweiten Komponente zugeführt wird. Besonders bevorzugt werden die erste und die zweite Komponente miteinander verrührt.

Bei einem weiteren bevorzugten Verfahren wird eine Durchflussmenge des in der Flüssigkeitsleitung zugeführten Konservierungsmittels gemessen.

Besonders bevorzugt wird das Getränk aus mehreren Komponenten gemischt und bevorzugt wird das Konservierungsmittel nach der Herstellung dieser Mischung zugeführt.

Bei einem weiteren bevorzugten Verfahren wird dem Getränk, insbesondere vor der Zuführung des Konservierungsmittels ein Gas und insbesondere Kohlendioxid zugeführt, insbesondere um das Getränk zu karbonisieren.

Weitere Vorteile und Ausführungsformen ergeben sich aus den beigefügten Figuren:
Darin zeigen:
- Fig. 1: eine Anlage zum Herstellen von Getränken;
- Fig. 2: eine Darstellung der erfindungsgemäßen Vorrichtung.

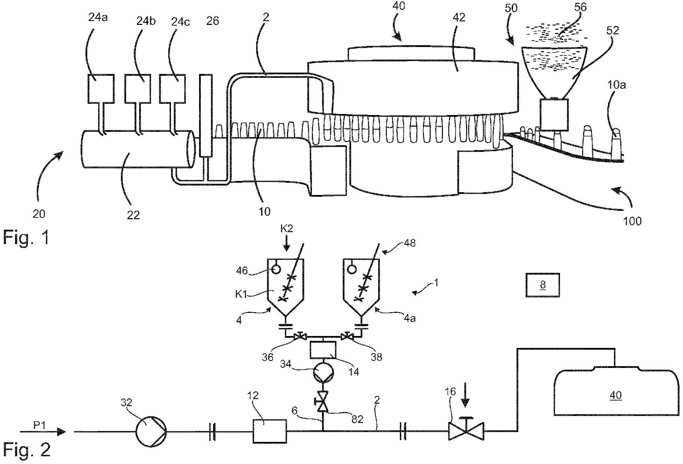

Fig. 1 zeigt eine Anlage 100 zum Herstellen von Getränkebehältnissen. Dabei bezieht sich das Bezugszeichen 20 auf eine Mischeinrichtung. Diese weist hier drei Reservoirs 24a, 24b und 24c auf, die jeweils zur Aufnahme von Komponenten eines Getränks dienen, beispielsweise von Wasser, von Sirup und von Zucker. Das Bezugszeichen 22 kennzeichnet einen Mischtank, in dem diese drei Komponenten zusammen gemischt werden. Es könnten jedoch auch mehr oder weniger Komponenten zusammengemischt werden.

Das Bezugszeichen 26 kennzeichnet eine Zuführeinheit, um der in dem Tank 22 entstandenen Mischung Kohlendioxid zuzuführen. Anschließend wird das Getränk über eine Flüssigkeitsleitung 2 einer Fülleinrichtung 40 und insbesondere einem Tank 42 zugeführt. Die abzufüllenden Behältnisse 10 werden dieser Fülleinrichtung 40 zugeführt und dort befüllt. Anschließend werden die Behältnisse mittels einer Verschließeinrichtung 50 mit Behältnisverschlüssen 56 verschlossen. Das Bezugszeichen 52 kennzeichnet eine Aufnahmeeinrichtung zur Aufnahme der Behältnisverschlüsse 56. Schließlich werden die gefüllten und verschlossenen Behältnisse abtransportiert.

Fig. 2 zeigt in ihrer Gesamtheit eine erfindungsgemäße Vorrichtung 1 zur Konservierung von Getränken. Diese kann beispielsweise in die in Fig. 1 gezeigte Flüssigkeitsleitung 2 integriert werden. Dabei ist wiederum eine Flüssigkeitsleitung 2 vorgesehen, welche hier das bereits gemischte Getränk einer Fülleinrichtung 40 zuführt. Das Bezugszeichen 32 kennzeichnet eine Pumpeneinrichtung, die zum Fördern des Getränks durch die Flüssigkeitsleitung 2 dient. Das Bezugszeichen 12 kennzeichnet eine Durchflussmesseinrichtung etwa einen FIT (Flow indicator transmitter), welche die Durchflussmenge des Getränks durch die Flüssigkeitsleitung 2 bestimmt.

Die Bezugszeichen 4 und 4a kennzeichnen zwei Aufnahmebehältnisse zur Aufnahme eines Konservierungsmittels. Dies Konservierungsmittel setzt sich hier aus zwei Komponenten zusammen, nämlich einer Flüssigkeit (Komponente K1) und einer zweiten, beispielsweise pulverförmigen Komponente K2. Diese zweite Komponente kann beispielsweise über einen Deckel der Aufnahmebehältnisse in die Flüssigkeit gebracht werden. Das Einbringen kann dabei durch einen Benutzer erfolgen.

Das Bezugszeichen 48 kennzeichnet eine Rühreinrichtung, die dazu dient, die beiden Komponenten des so entstehenden Konservierungsmittels miteinander zu vermischen. Über Zweigleitungen, in denen sich Ventile 36 und 38 befinden wird die Flüssigkeit zu der mit 6 bezeichneten Zuführleitung transportiert. In dieser Zuführleitung 6 befindet sich eine weitere Durchflussmesseinrichtung 14 sowie auch eine Pumpeinrichtung 34.

Das Bezugszeichen 82 kennzeichnet ebenfalls ein steuerbares und insbesondere regelbares Ventil, mit dem die Durchflussmenge des Konservierungsmittels in die Flüssigkeitsleitung 2 geregelt werden kann. Das Bezugszeichen 16 kennzeichnet eine weitere Ventileinrichtung, welche die Zufuhr des an dieser Stelle mit dem Konservierungsmittel versehen Getränks zu der Fülleinrichtung steuert.

Das Bezugszeichen 8 kennzeichnet schematisch eine Steuerungseinrichtung, welche die Zufuhr des Konservierungsmittels in die Flüssigkeitsleitung 2 steuert und insbesondere regelt.

Weiterhin kann sich noch optional in dem oder den Aufnahmebehältnissen eine Messeinrichtung befinden, mittels derer eine Konzentration der zweiten Komponente K2 in der ersten Komponente des Konservierungsmittels gemessen werden kann. Auch diese Konzentration kann bei der Zuführung des Konservierungsmittels in die Flüssigkeitsleitung von der Steuerungseinrichtung 8 berücksichtigt werden.

Das Bezugszeichen 8 kennzeichnet damit eine Steuerungseinrichtung zur Steuerung des gesamten Vorgangs, d. h. sowohl der Zudosage des Konservierungsmittels in die Flüssigkeitsleitung als auch bevorzugt die Zufuhr des mit dem Konservierungsmittel versehenen Getränks zu der Fülleinrichtung 40. Diese Steuerungseinrichtung 8 kann dabei wiederum in eine übergeordnete Maschinensteuerung eingebunden sein.

## Patentansprüche

1. Vorrichtung (1) zur Konservierung von Getränken mit einer Flüssigkeitsleitung (2), durch welche eine Flüssigkeit führbar ist und mit einer ersten Durchflussmesseinrichtung (12), welche dazu geeignet und bestimmt ist, eine Durchflussmenge der durch die Flüssigkeitsleitung 2 strömenden Flüssigkeit zu bestimmen, mit einem ersten Aufnahmebehältnis (4) zur Aufnahme eines Konservierungsmittels und mit einer Zuführleitung (6), welche dazu geeignet ist, das Konservierungsmittel der Flüssigkeitsleitung (2) zuzuführen,
**dadurch gekennzeichnet, dass**
die Vorrichtung eine erste Steuerungseinrichtung (8) aufweist, welche dazu geeignet und bestimmt ist, die Zufuhr des Konservierungsmittels in die Flüssigkeitsleitung 2 zu steuern, wobei das Konservierungsmittel kontinuierlich der Flüssigkeitsleitung 2 zuführbar ist wobei die erste Steuerungseinrichtung (8) ein steuerbares Ventil (82) aufweist, welches in der Zuführleitung (6) angeordnet ist und die Vorrichtung (1) eine erste Pumpeneinrichtung (34) zum Fördern des Konservierungsmittels aufweist.

2. Vorrichtung (1) nach Anspruch 1,
**dadurch gekennzeichnet, dass**
das steuerbare Ventil (82) ein regelbares Ventil (82) ist.

3. Vorrichtung (1) nach wenigstens einem der vorangegangenen Ansprüche,
**dadurch gekennzeichnet, dass**
die Vorrichtung (1) eine zweite Durchflussmesseinrichtung (14) aufweist, die zwischen dem ersten Aufnahmebehältnis und der Flüssigkeitsleitung (2) und insbesondere in der Zuführleitung (6) angeordnet ist und welche dazu geeignet und bestimmt ist eine Durchflussmenge des Konservierungsmittels zu bestimmen.

4. Vorrichtung (1) nach wenigstens einem der vorangegangenen Ansprüche,
**dadurch gekennzeichnet, dass**
die Vorrichtung ein zweites Aufnahmebehältnis (4a) zur Aufnahme des Konservierungsmittels aufweist.

5. Vorrichtung (1) nach wenigstens einem der vorangegangenen Ansprüche,
**dadurch gekennzeichnet, dass**
wenigstens ein Aufnahmebehältnis (4a, 4b) eine Mischeinrichtung (20) aufweist, um eine Komponente des Konservierungsmittels in eine Flüssigkeit einzumischen.

6. Vorrichtung (1) nach dem vorangegangenen Anspruch,
**dadurch gekennzeichnet, dass**
die Mischeinrichtung eine Rühreinrichtung zum Einrühren der Komponente in die Flüssigkeit aufweist.

7. Vorrichtung (1) nach wenigstens einem der vorangegangenen Ansprüche,
**dadurch gekennzeichnet, dass**
die Vorrichtung (1) eine zweite Steuerungseinrichtung aufweist, welche dazu geeignet und bestimmt ist die Zufuhr der mit dem Konservierungsmittel versehenen Flüssigkeit zu einer Fülleinrichtung zu steuern, wobei die zweite Steuerungseinrichtung bevorzugt ein steuerbares Ventil (16) aufweist.

8. Vorrichtung (1) nach dem vorangegangenen Anspruch,
**dadurch gekennzeichnet, dass**
die erste Pumpeneinrichtung (34) eine steuerbare Pumpeneinrichtung ist.

9. Vorrichtung (1) nach wenigstens einem der vorangegangenen Ansprüche,
**dadurch gekennzeichnet, dass**
die Vorrichtung (1) dazu geeignet und bestimmt ist, der Flüssigkeitsleitung (2) Glykolipide zuzuführen.

10. Vorrichtung (1) nach wenigstens einem der vorangegangenen Ansprüche,
**dadurch gekennzeichnet, dass**
die Vorrichtung (1) eine Mischeinrichtung (20) aufweist, welche mehrere Komponenten zur Herstellung des Getränks mischt, wobei bevorzugt diese Mischeinrichtung (20) in der Strömungsrichtung des Getränks stromaufwärts zu einer Position angeordnet ist, in der das Konservierungsmittel zugemischt wird.

11. Verfahren zur Konservierung von Getränken mit einer Flüssigkeitsleitung (2), durch welche eine Flüssigkeit und insbesondere ein Getränk geführt wird und mit einer ersten Durchflussmesseinrichtung (12), welche eine Durchflussmenge der durch die Flüssigkeitsleitung strömenden Flüssigkeit bestimmt, wobei in einem ersten Aufnahmebehältnis (4) ein Konservierungsmittels aufgenommen wird und mit einer Zuführleitung (6), das Konservierungsmittel der Flüssigkeitsleitung (2) zugeführt wird, **dadurch gekennzeichnet, dass**
die Vorrichtung eine erste Steuerungseinrichtung (8) aufweist, welche die Zufuhr des Konservierungsmittels in die Flüssigkeitsleitung (2) steuert, wobei das Konservierungsmittel kontinuierlich der Flüssigkeitsleitung zugeführt wird wobei das Konservierungsmittel Glykolipide aufweist.

12. Verfahren nach Anspruch 11,
**dadurch gekennzeichnet, dass**
ein Anteil der Glykolipide in einer Stammlösung größer ist als 0,1%, bevorzugt größer als 0,3% und bevorzugt größer als 0,5% und/oder ein Anteil der Glykolipide in einer Stammlösung geringer ist als 20%, bevorzugt geringer als 15%, bevorzugt geringer als 10%, bevorzugt geringer als 5% und bevorzugt geringer als 3%.

13. Verfahren nach wenigstens einem der vorangegangenen Ansprüche 11 - 12,
**dadurch gekennzeichnet, dass**
in dem Aufnahmebehältnis eine erste Komponente des Konservierungsmittels mit einer zweiten Komponente des Konservierungsmittels gemischt wird, wobei die zweite Komponente bevorzugt Wasser ist.

14. Verfahren nach wenigstens einem der vorangegangenen Ansprüche 11 - 13,
**dadurch gekennzeichnet, dass**
eine Durchflussmenge des der Flüssigkeitsleitung zugeführten Konservierungsmittels gemessen wird.

15. Verfahren nach wenigstens einem der vorangegangenen Ansprüche 11 - 14,
**dadurch gekennzeichnet, dass**
das Getränk aus mehreren Komponenten gemischt wird und bevorzugt das Konservierungsmittel nach der Herstellung dieser Mischung zugeführt wird.

## Claims

1. Apparatus (1) for preserving beverages, comprising a liquid line (2) through which a liquid can be guided, and with a first flow measuring device (12) which is suitable and intended to determine a flow rate of the liquid flowing through the liquid line (2), with a first receiving container (4) for receiving a preservative and with a supply line (6) which is suitable for supplying the preservative to the liquid line (2),
**characterized in that**
the apparatus has a first control device (8) which is suitable and intended to control the supply of the preservative to the liquid line (2), wherein the preservative can be continuously supplied to the liquid line (2), wherein the first control device (8) has a controllable valve (82) which is arranged in the supply line (6), and the apparatus (1) has a first pump device (34) for conveying the preservative.

2. Apparatus (1) according to claim 1,
**characterized in that**
the controllable valve (82) is an adjustable valve (82).

3. Apparatus(1) according to at least one of the preceding claims,
**characterized in that**
the apparatus (1) has a second flow measuring device (14) which is arranged between the first receiving container and the liquid line (2) and in particular in the supply line (6) and which is suitable and intended to determine a flow rate of the preservative.

4. Apparatus (1) according to at least one of the preceding claims,
**characterized in that**
the apparatus has a second receiving container (4a) for receiving the preservative.

5. Apparatus (1) according to at least one of the preceding claims,
**characterized in that**
at least one receiving container (4a, 4b) has a mixing device (20) for mixing a component of the preservative into a liquid.

6. Apparatus (1) according to the preceding claim,
**characterized in that**
the mixing device has a stirring device for stirring the component into the liquid.

7. Apparatus (1) according to at least one of the preceding claims,
**characterized in that**
the apparatus (1) has a second control device which is suitable and intended to control the supply of the liquid containing the preservative to a filling device, wherein the second control device preferably has a controllable valve (16).

8. Apparatus (1) according to the preceding claim,
**characterized in that**
the first pump device (34) is a controllable pump device.

9. Apparatus (1) according to at least one of the preceding claims,
**characterized in that**
the apparatus (1) is suitable and intended to supply glycolipids to the liquid line (2).

10. Apparatus (1) according to at least one of the preceding claims,
**characterized in that**
the apparatus (1) has a mixing device (20) which mixes several components for producing the beverage, wherein this mixing device (20) is preferably arranged upstream in the flow direction of the beverage at a position where the preservative is added.

11. Method for preserving beverages with a liquid line (2) through which a liquid, in particular a beverage, is guided, and with a first flow measuring device (12) which determines a flow rate of the liquid flowing through the liquid line, wherein a preservative is contained in a first receiving container (4) and the preservative is supplied to the liquid line (2) via a supply line (6),
**characterized in that**
the apparatus has a first control device (8) which controls the supply of the preservative to the liquid line (2), wherein the preservative is continuously supplied to the liquid line, wherein the preservative comprises glycolipids.

12. Method according to claim 11,
**characterized in that**
a proportion of the glycolipids in a stock solution is greater than 0.1%, preferably greater than 0.3% and preferably greater than 0.5%, and/or a proportion of glycolipids in a stock solution is less than 20%, preferably less than 15%, preferably less than 10%, preferably less than 5% and preferably less than 3%.

13. Method according to at least one of the preceding claims 11-12,
**characterized in that**
in the receiving container, a first component of the preservative is mixed with a second component of the preservative, wherein the second component is preferably water.

14. Method according to at least one of the preceding claims 11-13,
**characterized in that**
a flow rate of the preservative supplied to the liquid line is measured.

15. Method according to at least one of the preceding claims 11-14,
**characterized in that**
the beverage is mixed from several components and the preservative is preferably added after this mixture has been produced.

## Revendications

1. Dispositif (1) de conservation de boissons avec une conduite de liquide (2), à travers laquelle peut passer un liquide et avec un premier dispositif de mesure de débit (12) qui est approprié et destiné à déterminer un débit du liquide circulant à travers la conduite de liquide (2), avec un premier réceptacle (4) pour recevoir un conservateur et avec une conduite d'alimentation (6) qui est appropriée pour acheminer le conservateur vers la conduite de liquide (2) d'alimentation,
**caractérisé en ce que**
le dispositif présente un premier dispositif de commande (8) qui est approprié et destiné à commander l'alimentation du conservateur dans la conduite de liquide (2), dans lequel le conservateur peut être acheminé en continu dans la conduite de liquide (2), dans lequel le premier dispositif de commande (8) présente une vanne (82) commandable qui est disposée dans la conduite d'alimentation (6) et le dispositif (1) présente un premier dispositif de pompage (34) pour le transport du conservateur.

2. Dispositif (1) selon la revendication 1,
**caractérisé en ce que**
la vanne (82) commandable est une vanne (82) régulable.

3. Dispositif (1) selon au moins l'une quelconque des revendications précédentes,
**caractérisé en ce que**
le dispositif (1) présente un second dispositif de mesure de débit (14) qui est disposé entre le premier réceptacle et la conduite de liquide (2) et en particulier dans la conduite d'alimentation (6) et qui est approprié et destiné à déterminer une quantité de débit du conservateur.

4. Dispositif (1) selon au moins l'une quelconque des revendications précédentes,
**caractérisé en ce que**
le dispositif présente un second réceptacle (4a) pour recevoir le conservateur.

5. Dispositif (1) selon au moins l'une quelconque des revendications précédentes,
**caractérisé en ce que**
au moins un réceptacle (4a, 4b) présente un dispositif de mélange (20) pour mélanger un composant du conservateur dans un liquide.

6. Dispositif (1) selon la revendication précédente,
**caractérisé en ce que**
le dispositif de mélange présente un dispositif d'agitation pour mélanger le composant dans le liquide.

7. Dispositif (1) selon au moins l'une quelconque des revendications précédentes,
**caractérisé en ce que**
le dispositif (1) présente un second dispositif de commande qui est approprié et destiné à commander l'alimentation du liquide pourvu du conservateur dans un dispositif de remplissage, dans lequel le second dispositif de commande présente de préférence une vanne (16) commandable.

8. Dispositif (1) selon la revendication précédente,
**caractérisé en ce que**
le premier dispositif de pompage (34) est un dispositif de pompage commandable.

9. Dispositif (1) selon au moins l'une quelconque des revendications précédentes,
**caractérisé en ce que**
le dispositif (1) est approprié et destiné à fournir des glycolipides à la conduite de liquide (2).

10. Dispositif (1) selon au moins l'une quelconque des revendications précédentes,
**caractérisé en ce que**
le dispositif (1) présente un dispositif de mélange (20) qui mélange plusieurs composants pour la fabrication de la boisson, dans lequel ce dispositif de mélange (20) est de préférence disposé dans la direction d'écoulement de la boisson en amont vers une position, dans laquelle le conservateur est mélangé.

11. Procédé de conservation de boissons avec une conduite de liquide (2), par laquelle passe un liquide et notamment une boisson et avec un premier dispositif de mesure de débit (12) qui détermine un débit du liquide circulant à travers la conduite de liquide, dans lequel un conservateur est logé dans un premier réceptacle (4) et le conservateur est fourni à la conduite de liquide (2) par une conduite d'alimentation (6), **caractérisé en ce que**
le dispositif comporte un premier dispositif de commande (8) qui commande l'alimentation du conservateur dans la conduite de liquide (2), dans lequel le conservateur est alimenté en continu dans la conduite de liquide, dans lequel le conservateur présente des glycolipides.

12. Procédé selon la revendication 11,
**caractérisé en ce que**
une proportion des glycolipides dans une solution mère est supérieure à 0,1 %, de préférence supérieure à 0,3 % et de préférence supérieure à 0,5 % et/ou une proportion des glycolipides dans une solution mère est inférieure à 20 %, de préférence inférieure à 15 %, de préférence inférieure à 10 %, de préférence inférieure à 5 % et de préférence inférieure à 3 %.

13. Procédé selon au moins l'une quelconque des revendications précédentes 11 à 12,
**caractérisé en ce que**
dans le réceptacle, un premier composant du conservateur est mélangé à un second composant du conservateur, dans lequel le second composant est de préférence de l'eau.

14. Procédé selon au moins l'une quelconque des revendications précédentes 11 à 13,
**caractérisé en ce que**
un débit du conservateur fourni à la conduite de liquide est mesuré.

15. Procédé selon au moins l'une quelconque des revendications précédentes 11 à 14,
**caractérisé en ce que**
la boisson à plusieurs composants est mélangée et de préférence, le conservateur est ajouté après la préparation de ce mélange.
